# FASCICULE DE BREVET EUROPEEN

(11) **EP 2 854 606 B1**
(45) Date de publication et mention de la délivrance du brevet: **03.08.2016**
(21) Numéro de dépôt: 13727297.7
(22) Date de dépôt: 15.05.2013
(51) Int. Cl.: A47J 31/06

(54) **BOITE A INFUSION POUR MACHINE A BOISSON**
INFUSIONSKASTEN FÜR EINEN GETRÄNKEAUTOMATEN
INFUSION BOX FOR A BEVERAGE MACHINE

(30) Priorité: 24.05.2012 FR 1254753
(43) Date de publication de la demande: 08.04.2015
(73) Titulaire: SEB S.A., 69130 Ecully (FR)
(72) Inventeur: MORIN, Gilles, F-21490 Varois Et Chaignot (FR)
(74) Mandataire: Novagraaf Technologies
(86) Numéro de dépôt international: PCT/FR2013/051061
(87) Numéro de publication internationale: WO 2013/175100

(56) Documents cités:
- DE-U1- 8 535 291
- US-A1- 2009 229 470
- US-A1- 2011 274 802

## Description

### Domaine technique

La présente invention se rapporte à une boîte à infusion destinée à contenir au moins une dosette qui se laisse traverser par de l'eau tout en retenant une matière infusable ou boîte à « pods », ainsi qu'à une machine à boisson, par exemple café ou à thé, polyvalente comprenant ladite boîte. Le document US 2011/274802 décrit une telle boîte.

La présente invention trouve notamment une application dans le domaine des cafetières ou théière, en particulier des cafetières ou théières électriques permettant de préparer des boissons à partir d'une matière infusable, par exemple du café ou du thé, et d'eau chaude ou froide qui traverse ladite matière.

Dans la description ci-dessous, les références entre crochets ([]) renvoient à la liste des références présentée à la fin du texte.

### Etat de la technique

Dans le domaine des machines à café ou à thé utilisant des dosettes en papier filtre ou en dur contenant une matière infusable, par exemple du café torréfié moulu et pressé, sont connues :
- les machines à café du type Senseo (marque déposée) de chez Phillips qui utilisent des dosettes « papier » de 7 gr pour une tasse à café et nécessitent une pompe de faible pression (2 à 3 bars) pour le passage de l'eau à travers les dosettes de café. Ces machines n'utilisent pas de verseuse pour une grande quantité de café ;
- les machines à café de type Nespresso (marque déposée) de chez Nestlé ou Dolce Gusto (marque déposée) de chez Nescafé qui utilisent des dosette en « dur » ou capsule de 5 à 7 gr pour une tasse à café et nécessitent une pompe haute pression (15 à 19 bars) pour le passage de l'eau à travers les dosettes de café. Dans cette catégorie, il existe également des cafetières utilisant des dosettes « papier » de 7 gr du type Illy café (marque déposée) ou Malongo (marque déposée) et nécessitant une pompe haute pression (15 à 19 bars) pour la passage de l'eau à travers les dosettes de café ;

- les machines à café de chez Carte Noire (marque déposée) qui utilisent des dosettes « papier » de 80 gr et n'utilisent pas de pompe pour le passage de l'eau à travers les dosettes de café. Toutefois ces machines sont réservées à un usage professionnel et ne peuvent utiliser qu'une seule dosette (pas de possibilité de faire ½ dosette de café) et ne sont pas compatibles avec une tasse de voyage (« travel mug » en anglais) consistant en un récipient généralement isolé thermiquement et entièrement clos permettant le transport de liquides chauds sans risque de déversements, possédant généralement une ouverture dans le couvercle à travers lequel les liquides peuvent être consommés pendant le transport sans déversement ;
- les machines à café de chez « Andis (marque déposée) Commercial » (machine américaine) qui utilisent des dosettes de café de 10 gr pour réaliser des tasses de café. Ces machines ne peuvent utiliser qu'une seule dosette ;
- les machines à café de chez « Andis (marque déposée) Commercial » (machine américaine) qui utilisent aussi bien des dosettes de café de 20 gr qu'un système de filtres papier et de café moulu pour la réalisation d'une verseuse de 4 tasses.

Toutefois ces machines à café utilisant des dosettes ou capsules individuelles bien que jugées très pratiques ne peuvent pas réaliser en une seule fois de grande quantité de café.

Dans le domaine des machines à café ou à thé utilisant une verseuse et une ou plusieurs tasses (de voyage), sont connues :
- les machines à café de chez Hamilton Beach (marque déposée) qui utilisent soit un pot thermos soit deux tasses de voyage ;
- les machines à café de chez Cuisinart (marque déposée) qui utilisent deux tasses de voyage ;
- les machines à café de chez Hamilton Beach (marque déposée) qui utilisent une tasse (de voyage).

Toutefois ces machines ne peuvent pas utiliser de dosettes.

Par ailleurs, l'utilisation d'une cafetière filtre classique nécessite la mise en place d'un filtre à café à l'intérieur du porte filtre, de mettre une quantité de café moulu à l'intérieur du filtre à l'aide d'une cuillère doseuse. Cette gestion n'est pas toujours précise et la manipulation de la mouture de café peut entraîner des salissures sur le plan de travail. Aujourd'hui, seules les cafetières équipée d'une pompe permettent l'usage de dosettes ou « pods » en angiais, ce qui rend ces appareils souvent couteux. Ces derniers appareils ne permettant pas de réaliser de grandes quantités de cafés en une seule fois. L'usage de café le plus couramment rencontré pour les cafetières filtre est en paquet de 250 g ou de 500 g selon les pays. Très vite, le café perd de sa fraîcheur et l'oxydation du café entraîne une perte automatique d'arôme.

Il est connu du brevet US9179797 un adaptateur pour des dosettes de matière infusable comprenant un récipient et un couvercle adapté pour coopérer avec le récipient. Le récipient est destiné à recevoir une dosette de matière infusable, notamment une dosette de café. Parallèlement, le couvercle comprend un orifice à son centre à travers lequel est passée de l'eau chaude.

Des reliefs sont pratiqués à l'intérieur du récipient, par exemple à la surface interne de la paroi latérale ou au fond du récipient, de manière à pousser la dosette insérée dans le récipient vers le haut jusqu'à ce qu'elle touche le couvercle afin de compresser la matière infusable. Un tel adaptateur permet donc de réaliser des boissons (du café) à dose constante tout en conservant la fraîcheur de la matière infusable contenue dans la dosette.

Cependant, la réalisation d'une boisson à partir de l'adaptateur tel que décrit peut être interrompue. En effet, lors de l'infusion, la dosette gonfle et de ce fait se retrouver collée contre l'orifice du couvercle. Ainsi, cela empêche l'eau de pénétrer par ledit orifice, ce qui conduit à un écoulement non souhaité d'eau à l'extérieur de la boîte à infusion.

Il existe donc un besoin pour des machines à café ou à thé polyvalentes palliant ces défauts, inconvénients et obstacles de l'art antérieur, en particulier d'un système permettant de faciliter l'usage des machines à café ou à thé du type de celles utilisant un porte filtre classique que ce soit pour l'obtention d'une verseuse ou d'une tasse, y compris d'une tasse de voyage, de boisson obtenue à partir de matière infusable, de garantir une fraîcheur de ia matière infusable, d'utiliser ou développer des appareils plus compacts tout en conservant la même capacité et permettant d'obtenir des boissons plus chaudes, de réduire les coûts et d'améliorer la manipulation et la gestion de la matière infusable, par exemple de la mouture de café ou de thé.

### Description de l'invention

Pour résoudre les inconvénients de l'art antérieur et répondre aux besoins précités, les inventeurs ont mis au point une boîte à infusion amovible, utilisable à la place du porte filtre d'une machine à café ou à thé classique.

La présente invention a donc pour objet une boîte à infusion destinée à contenir au moins une dosette qui se laisse traverser par de l'eau tout en retenant une matière infusable, ladite boîte étant dotée d'une partie supérieure et d'une partie inférieure, chacune de ces parties comportant un orifice permettant un écoulement d'eau traversant ladite dosette lorsqu'elle est présente dans la boîte, ladite boîte étant caractérisée en ce qu'elle comprend intérieurement et autour de l'orifice de la partie supérieure, au moins une entretoise qui maintient un écart entre l'orifice de la partie supérieure, par lequel l'eau entre dans la boîte, et la dosette alors contenue dans la boîte, lors de l'infusion par passage de l'eau à travers ladite dosette qui gonfle alors.

Par « dosette » (ou « pod » en anglais), on entend un contenant laissant passer de l'eau à travers celui-ci. Il peut s'agir par exemple d'un contenant en papier filtre, par exemple en papier filtre destiné à retenir du café ou du thé et à laisser passer de l'eau à travers ce café ou ce thé pour la préparation d'une boisson, par exemple café ou thé. Le filtre peut être par exemple en papier et à usage unique ou en nylon. De préférence, le papier filtre formant la dosette permet de rehausser la saveur et la qualité du café ou du thé buvable qui est obtenu lors de l'utilisation de la boîte à infusion selon la présente invention. Le matériau du fond de la dosette peut être conçu par exemple pour résister à la chaleur émise par une plaque de maintien au chaud d'une boisson chaude préparée.

Par « matière infusable » on entend toute matière permettant, lorsqu'elle est traversée par de l'eau, la préparation d'une boisson. La matière infusable peut être par exemple du café, un mélange de café et de chicorée ou du thé, ou une préparation à base de café ou de thé, de préférence sous forme infusable pour la préparation de café ou de thé buvable. L'eau peut être de l'eau froide, à température ambiante ou de l'eau chaude en fonction de la matière infusable et du choix de boisson souhaité par l'utilisateur.

Le café peut être tout café ou préparation à base de café connu de l'homme du métier, par exemple arabica ou robusta, pur ou en mélange et prêt à être infusé. Le thé peut être tout thé ou mélange de thé ou préparation à base de thé connu de l'homme du métier pour être prêt à être infusé.

La boîte à infusion de la présente invention est conçue afin que l'eau s'écoule par percolation sous l'effet de la gravité à travers la ou les dosettes placée(s) dans celle-ci. Le liquide infusé est recueilli sous la boîte à infusion, par exemple dans une cafetière ou dans la tasse directement. Techniquement, la boisson est donc obtenue par lixiviation, procédé proche de l'infusion. Il ne s'agit pas d'une décoction qui détruit certains arômes et en ajoute de nouveaux.

Le principal objectif de la présente invention est de faciliter l'usage d'une machine à café ou à thé à filtre que ce soit pour l'obtention d'une verseuse ou quantité individuelle de boisson obtenue à partir de la matière infusable, par exemple une tasse, par exemple une tasse de voyage.

La présente invention permet, à partir de la boîte à dosettes, de remplir directement une tasse, par exemple une tasse de voyage, de boisson obtenue à partir de la matière infusable, sans risque de déversement de la boisson en dehors de la tasse et/ou de perte de température et/ou d'arôme.

La présente invention rend également un usage d'une machine à café ou à thé plus propre et précis dans la mesure où il n'y a plus de manipulation de matière infusable, par exemple de café moulu ou de thé, et plus de problème de dosage de ladite matière infusable.

La présente invention permet également de garantir la fraicheur de la boisson obtenue à partir de la matière infusable dans la mesure où la dosette de matière infusable peut être sortie d'une protection individuelle, par exemple une pochette hermétique, juste avant son usage contrairement par exemple à un paquet de café moulu de 250 ou 500 g ou de thé qui une fois ouvert lors la première utilisation perd rapidement de sa fraicheur et de son arôme.

La présente invention est également économique par sa conception et par son utilisation, car la boîte à infusion ne coûte pas plus chère qu'un porte filtre classique et elle fonctionne pourtant comme une machine à filtre classique, contrairement aux machines actuelles équipées d'une pompe injectant l'eau sous pression et utilisant des dosettes ou capsules individuelles qui sont souvent coûteuses sans permettre de réaliser de grande quantité de matière infusable.

En outre, la présente invention permet l'usage de dosettes en papier filtre bien plus économiques que des dosettes en dur, par exemple que celles en plastique ou en aluminium.

En outre, la présente invention permet d'éviter de salir la machine à boisson.

La présente invention permet également d'obtenir une machine à café ou à thé de taille plus compacte que les machines à café ou thé classiques, pour une même capacité de confection d'une boisson, la boîte à infusion étant de plus petite dimension qu'un porte filtre classique et laissant ainsi d'avantage de place pour le réservoir d'eau. Ainsi, la présente invention permet en outre d'ouvrir la voie à la conception de nouvelles architectures de machine à café ou à thé.

En outre, la présente invention permet d'obtenir une boisson plus chaude, par exemple de 1 à 2°C supplémentaire par rapport à une machine à café ou à thé utilisant un porte filtre classique dans la mesure où la boîte à infusion est de plus petite dimension et peut être dotée d'un couvercle fermé limitant ainsi les pertes calorifiques et optimisant l'infusion de la matière infusable lors de la préparation de la boisson.

La boîte de la présente invention peut être constituée de tout matériau connu de l'homme du métier comme étant adapté à la préparation d'une boisson chaude et/ou d'une boisson froide, de préférence d'un matériau résistant à la chaleur. Il peut s'agir d'un matériau métallique ou plastique ou les deux, ou encore de verre. Lorsque le matériau est métallique, il peut s'agir par exemple d'un acier inoxydable. Lorsque le matériau est du plastique, il peut s'agir par exemple par exemple d'un thermoplastique « alimentaire » de type polypropylène ou autre polyamide, etc. Il peut s'agir également d'une boite en métal revêtue d'un matériau plastique, par exemple tels que ceux précités. Lorsque le matériau est du verre, il peut s'agir par exemple de borosilicate. Lorsque le matériau est transparent, cela permet de visualiser l'infusion. La boîte peut être obtenue par moulage ou tout autre procédé approprié au mode de réalisation choisi de la présente invention et au matériau(x) utilisé(s).

Suivant le matériau utilisé, la boîte peut être obtenue par exemple par injection plastique (pour les matières thermoplastique), ou par exemple par emboutissage dans le cas des matières métal, ou par exemple par pressage dans le cas de l'utilisation du verre.

Selon l'invention, par « entretoise », on entend une pièce destinée à maintenir un écart entre l'orifice de la partie supérieure de la boîte à infusion, par lequel l'eau entre dans la boîte, et la ou les dosette(s) ,alors contenue(s) dans la boite à infusion, lors de l'infusion par passage de l'eau à travers celle(s)-ci. En effet, lors de l'infusion, la ou les dosette(s) gonfle(nt) et peuvent de ce fait se retrouver collée(s) contre l'orifice de la partie supérieure de la boîte à infusion et empêcher ainsi l'eau de pénétrer par ledit orifice de la partie supérieure ce qui conduit à un écoulement non souhaité d'eau à l'extérieur de la boîte à infusion. Cette entretoise peut avoir toute forme permettant de maintenir cet écart. Il peut s'agir par exemple d'un ou de plusieurs éléments identiques ou différents choisis parmi une protubérance, un picot, une saillie, une rainure, un anneau, une ailette, un téton, une couronne, une pale, une bille, une nervure.

Lorsque l'entretoise est formée de plusieurs éléments, ceux-ci peuvent être disposés autour de l'orifice et/ou sur toute la surface de la partie supérieure de la boîte à infusion, de manière irrégulière ou régulière. La taille de ces éléments peut être identique ou variable d'un élément à l'autre, par exemple en fonction de l'éloignement des éléments par rapport à l'orifice. De préférence, l'entretoise, qu'elle soit composée d'un seul élément ou de plusieurs, se trouve à proximité de l'orifice.

Selon l'invention, de préférence, ladite, au moins une, entretoise entoure l'orifice.

Selon l'invention, de préférence, l'entretoise est un anneau ou une couronne.

Ainsi, selon l'invention, l'entretoise peut être sous la forme d'un seul anneau ou d'une seule couronne qui entoure l'orifice. De préférence l'anneau ou ia couronne est discontinu ou présente au moins une ouverture latérale, de préférence plusieurs, afin de laisser passer l'eau à travers celle-ci, même lorsqu'une dosette gonflée est plaquée contre l'anneau ou la couronne. Selon l'invention, l'anneau peut également être discontinu en ce qu'il est formé d'une multitude d'éléments, par exemple choisis parmi ceux précités, séparés les uns des autres et disposés de manière régulière ou irrégulière autour de l'orifice.

La taille de l'entretoise est notamment déterminée en fonction de la souplesse de la dosette lorsqu'elle est gonflée d'eau et de la résistance à la déchirure du papier filtre qui la forme. Cette taille est de préférence choisie afin que l'entretoise remplisse sa fonction précitée. Selon la présente invention, ladite, au moins une, entretoise a par exemple une hauteur de 5 à 45 mm. Cette hauteur est celle mesurée entre la surface sur laquelle elle est disposée et l'extrémité de ladite entretoise la plus éloignée de ladite surface.

Selon l'invention, ladite, au moins une, entretoise est de préférence fixe. Par exemple, elle peut être fixée à l'intérieur de la boîte, à la surface de la partie supérieure de celle-ci et autour de l'orifice. Par exemple, elle peut faire partie intégrante de la partie supérieure de la boîte, lors du moulage de ladite boîte et donc être constituée du matériau de ladite boîte.

Le matériau de l'entretoise peut donc être identique ou différent du matériau formant la boîte à infusion. Il peut s'agir par exemple d'un des matériaux précités pour la boîte à infusion. De préférence, le matériau est identique à celui de la boîte.

Selon l'invention, la partie supérieure de ladite boîte peut en fait être un couvercle permettant d'ouvrir et de fermer ladite boîte, notamment pour y introduire une ou plusieurs dosettes de matière infusable avant utilisation de la dite boîte pour la préparation d'une boisson chaude ou froide. Selon l'invention, ledit couvercle comprend alors l'orifice et l'entretoise. Seion l'invention, ledit couvercle peut être constitué d'un matériau identique ou différent de la dite boite, par exemple choisie parmi les matériaux précités constituant ladite boîte. De préférence, le matériau du couvercle est identique au matériau de la dite boite. Le couvercle peut être par exemple un couvercle se retirant totalement ou un couvercle pivotant pour ouvrir ou fermer ladite boîte.

Alternativement, la partie supérieure de ladite boîte peut être constituée d'une partie de la machine à boisson prévue pour recevoir ladite boîte à infusion, en particulier la partie de la machine par laquelle s'écoule l'eau, ou partie entourant l'orifice d'arrivée de l'eau, destinée à traverser les dosettes, ladite partie étant alors munie de ladite entretoise afin d'éviter l'obturation de l'écoulement de l'eau chaude ou froide. L'entretoise peut être définie telle que ci-dessus. Cette entretoise, constituée d'un ou de plusieurs éléments, comme exposé ci-dessus, se trouve alors, de préférence, autour dudit écoulement ou orifice d'arrivée d'eau.

Selon l'invention, la paroi intérieure de ladite boîte est de préférence lisse. Cela permet au papier filtre des dosettes de matière infusable, par exemple de café ou de thé, de venir adhérer à la paroi de la boîte lors de leur gonflement pendant l'infusion, ce qui favorise le passage de l'eau chaude ou froide à travers les dosettes, et donc à travers la matière infusable, et non sur les côtés.

Selon l'invention, la partie inférieure de ladite boîte est de préférence en pente, en particulier vers l'orifice de cette partie inférieure, afin que la boisson chaude ou froide préparée sorte de ladite boîte par ledit orifice et puise être récupérée dans une carafe ou une tasse placée sous ladite boîte.

Selon l'invention, la partie inférieure intérieure de ladite boîte peut également comporter des nervures convergentes vers l'orifice de cette partie inférieure. Ces nervures permettent l'extraction de la matière infusable à partir de la dosette et l'écoulement de l'extrait vers le trou de sortie au fond de la boîte. Il peut s'agir également d'ailettes ou tout élément permettant de maintenir une distance entre les dosettes et l'orifice de la partie inférieure et permettant de conduire la boisson préparée vers ledit orifice.

Selon l'invention, un stop-goutte, comme sur les portes filtres classiques, peut être prévu au niveau de l'orifice de la partie inférieur de la boîte à infusion pour éviter tout écoulement lors de la manipulation de la boîte à infusion et ou lors du retrait de la carafe ou de la tasse récupérant la boisson préparée. Le stop-goutte peut être muni d'un joint d'étanchéité permettant, lors de l'extraction de la boîte à infusion d'une machine à boisson, de fermer l'orifice de la partie inférieure de la boîte.

Selon l'invention, l'orifice de la partie inférieure de ladite boîte peut être excentré. Cela permet de décaler avantageusement la boîte à infuser vers l'avant de l'appareil tout en maintenant la position de la verseuse.

Selon la présente invention, la partie inférieure de ladite boîte peut comporter deux orifices. Cela permet de distribuer la boisson préparée sortant de ladite boîte simultanément dans deux tasses, y compris tasse de voyage, ou « travel mugs » en anglais, en même temps.

Selon la présente invention, ladite boîte est de préférence de forme cylindrique, au moins à l'intérieure de celle-ci, ce qui favorise le passage de l'eau chaude ou froide à travers les dosettes, et donc à travers la matière infusable, et non sur les côtés. Sa forme extérieure peut être dictée par la machine qui la reçoit et/ou par des considérations esthétiques.

Selon la présente invention, ladite boîte a un diamètre permettant juste d'accueillir la dosette à plat. En effet, cela favorise le passage de l'eau chaude ou froide à travers les dosettes, et donc à travers la matière infusable, et non sur les côtés.

Selon la présente invention, ladite boite a par exemple un diamètre interne de 60 à 110 mm, de préférence de 90 mm. Ce diamètre est généralement en rapport avec la taille des dosettes de matière infusable disponibles dans le commerce.

Selon la présente invention, la hauteur de ladite boîte, en particulier de l'intérieur de celle-ci, peut être par exemple de 50 à 100 mm. Cette hauteur peut être choisie par exemple afin de pouvoir contenir au moins une dosette comprenant de 20 à 40 g de matière infusable, par exemple de café moulu et permettre leur gonflement pendant l'infusion. La taille des dosettes et/ou leur quantité peuvent évoluer en fonction de la capacité de la machine à café ou à thé, par exemple pour remplir aussi bien une verseuse de 0,5 L à 1,5 L, qu'une tasse, par exemple de voyage, de 0,3 à 0,5 L. Selon la présente invention, la hauteur de boîte à infusion peut par exemple être définie pour pouvoir contenir 1 à 5 dosettes empilées, par exemple 3 dosettes empilées, chacune pouvant contenir par exemple de 20 à 40 g de matière infusable et permettre leur gonflement pendant l'infusion. De préférence, la boîte à infusion selon l'invention est telle qu'elle permet d'accueillir des dosettes standard déjà disponibles sur le marché, par exemple les dosettes de 20 gr de chez Maxwell House (marque déposée), Starbucks (marque déposée), etc.

Selon l'invention, des bourrelets à l'extérieur de la boîte peuvent être prévues pour permettre la mise en place de la boîte à infusion sur la machine à café ou à thé en frontale. Il peut s'agir par exemple d'un ou deux bourrelet(s), ou d'avantage, destinée(s) à s'insérer dans une nervure ou fente complémentaire prévue dans une cafetière pour maintenir la boîte à infusion sur cette dernière.

Selon l'invention, la boîte à infusion peut également être munie d'une ou plusieurs poignée(s) permettant à son utilisateur de tenir la boîte à infusion pour l'introduire ou la sortir de la machine à préparer la boisson.

La présente invention a également pour objet une machine à boisson, par exemple à café ou à thé, comprenant une boîte selon l'invention. La machine à boisson peut être électrique ou non. Lorsqu'elle est électrique, elle permet de chauffer l'eau qui est utilisée pour la préparation du café. Lorsqu'elle ne l'est pas, il s'agit d'un dispositif de maintient de la boîte à infusion de la présente invention au dessus d'une carafe ou d'une tasse de manière à récupérer la boisson préparée, l'eau étant versée manuellement, éventuellement après avoir été chauffée par un moyen extérieur au dispositif, électrique ou à gaz.

Selon l'invention, la boîte à infusion peut demeurer sur la machine à boisson, comme un porte filtre pivotant ou être amovible. Elle peut par exemple être clipsée sur la machine à boisson, par exemple à café ou à thé, au moment de l'utilisation. Elle peut être introduite par le dessus ou en frontal de la machine à boisson, par exemple à café ou à thé.

La hauteur entre la plaque de maintien au chaud de la machine à café ou à thé électrique et la boîte à infusion est adaptée pour recevoir soit une serveuse d'une capacité par exemple de 0,5 à 3 L, par exemple de 0,5 à 1,5 L, par exemple de 1,2 à 1,5 L, soit une tasse, par exemple de voyage, jetable ou non, par exemple de capacité de 0,2 à 0,5 L.

Selon l'invention, lorsque le diamètre de la boîte à infuser est inférieur au diamètre de la verseuse cela laisse plus de place pour le réservoir d'eau de la machine à boisson à l'arrière de la boîte à infuser. Ainsi, grâce à la présente invention, la surface du réservoir d'eau au niveau de la boîte à infuser peut être plus importante, et pour une même capacité de réservoir d'eau, la hauteur de celui-ci peut être moins importante. Cette excentration permet de gagner sur la hauteur totale de l'appareil, par exemple de 30 mm. Ce gain en compacité permet de réduire de manière significative le coût de fabrication de l'appareil.

Du fait de l'utilisation de dosettes, en particulier d'un pré-dosage de la matière infusable, la présente invention permet avantageusement un accès frontal de la boîte à dosettes et son amovibilité.

Selon l'invention, ladite machine peut avoir par exemple une capacité de 0,2 à 3 litres.

La présente invention a également pour objet un procédé de fabrication d'une machine à café selon l'invention comprenant une étape d'insertion d'une boîte selon l'invention dans ladite machine. La boîte à infusion selon l'invention, en particulier sa taille, sa forme extérieure et le positionnement des orifices sont de préférence adaptés à la machine à boisson qui doit la recevoir et inversement.

D'autres avantages peuvent encore apparaître à l'homme du métier à la lecture des exemples ci-dessous, illustrés par les figures annexées, donnés à titre illustratif.

### Brève description des figures

- La figure 1 représente une vue filaire d'une boîte à infusion selon l'invention.
- La figure 2 représente une vue filaire d'une machine à café selon l'invention comprenant une boîte à infusion selon l'invention.
- La figure 3 est vue en coupe d'une machine à café selon l'invention.
- La figure 4 illustre un exemple de boîte à infusion comprenant deux dosettes.
- Les figures 5 et 6 représentent des exemples de dosettes.

### EXEMPLES DE REALISATION

### Exemple 1 : Exemple d'une boîte à infusion selon l'invention

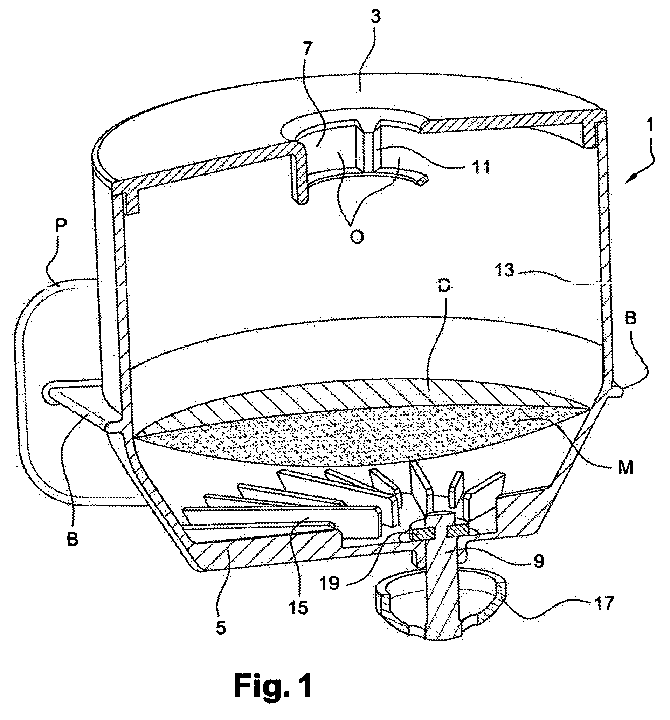

Une boîte (1) à infusion ou boîte à dosettes ou boîte à « pods » selon l'invention est représentée sur la figure 1 annexée. Cette boîte (1) est destinée à contenir d'une à cinq dosette(s) (D) qui se laisse(nt) traverser par de l'eau tout en retenant une matière infusable (M).

La boîte est dotée d'une partie supérieure (3) et d'une partie inférieure (5), chacune de ces parties comportant un orifice (7, 9) permettant un écoulement d'eau traversant ladite dosette lorsqu'elle est placée dans la boîte. Cette boîte comprend intérieurement et autour de l'orifice (7) de la partie supérieure (3), une entretoise (11).

Dans cet exemple, la partie supérieure (3) de la boîte est un couvercle amovible comportant l'orifice (7) d'entrée de l'eau dans la boîte et l'entretoise (11).

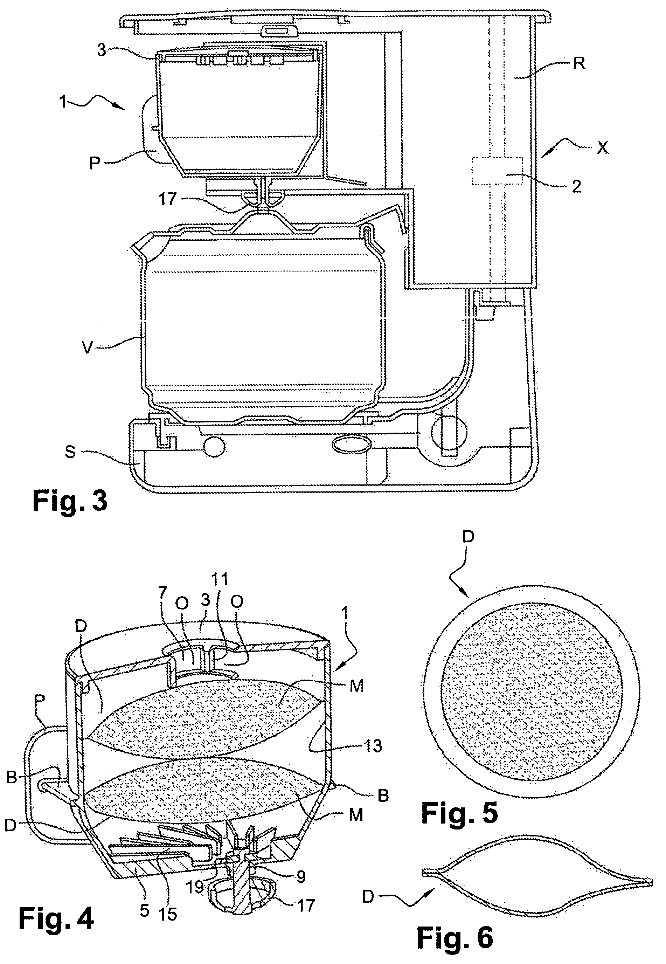

Dans cet exemple, l'entretoise est sous forme d'un anneau présentant des ouvertures (O) latérales, afin que l'eau entrant par l'orifice (7) continue à s'écouler dans la boîte, à travers la ou les dosette(s), même lorsque celle(s)-ci est (sont) gonflée(s) par l'eau imprégnant la matière infusable lors de la préparation de la boisson (voir figure 4). En l'absente de l'entretoise, la dosette gonflée la plus proche de l'orifice (7) viendrait se coller à celui-ci et l'obturer pendant la préparation de la boisson.

Dans cet exemple, la boîte (1) est de section cylindrique dans sa partie supérieure et tronconique dans sa partie inférieure. Ainsi, la partie inférieure de la boite est en pente. La paroi interne de la boîte est lisse pour favoriser l'adhérence de la dosette de matière infusable, en particulier de son enveloppe de papier filtre.

Dans cet exemple, la boîte (1) à infusion a été munie d'éléments optionnels tels que :
- une poignée (P) permettant à son utilisateur de tenir la boîte à infusion pour l'introduire ou la sortir de la machine à préparer la boisson, et de bourrelets (B) destinées à s'insérer dans une nervure ou fente complémentaire à ce ou ces bourrelet(s) et prévue dans une cafetière pour maintenir la boîte à infusion sur cette dernière.
- un stop-goutte (17) muni d'un joint d'étanchéité (19) permettant, lors de l'extraction de la boîte à infusion d'une machine à boisson, de fermer l'orifice (9) de la partie inférieure de la boîte, c'est à dire la sortie de boisson préparée, et d'éviter les écoulements inopportuns.

Dans cet exemple, la boîte comprend également une partie inférieure (5) ou fond de la boîte, qui peut être munie de nervures (15) qui favorisent l'écouulement de ia boisson préparée, par exemple de café, vers l'orifice (9) de sortie de celle-ci.

La boîte est dimensionnée de manière à recevoir des dosettes standard déjà disponibles sur le marché (voir figures 5 et 6), par exemple les dosettes de 20 gr de chez Maxwell House (marque déposée), Starbucks (marque déposée. En particulier, sa hauteur de l'orifice de la partie inférieure à l'orifice de la partie supérieure est de 72 mm.

La boîte est constituée de polypropylène (thermoplastique). Elle a été préparée par moulage par injection plastique.

Cette boîte à infusion peut également contenir 1 ou 2 dosettes de 25 g ou 31,25 g de matière infusable (voir figure 4), par exemple du café. La quantité de café par dosette peut être de 20 à 40 g et le nombre de dosettes pouvant être introduit de 1 à 5 suivant leur taille.

Cette boîte est conçue pour recevoir de grosses dosettes cylindriques et la boîte permet à ces dosettes de gonfler pendant l'infusion sans empêcher la préparation de la boisson chaude ou froide.

### Exemple 2 : Machine à boisson chaude utilisant une boîte à infusion selon l'invention

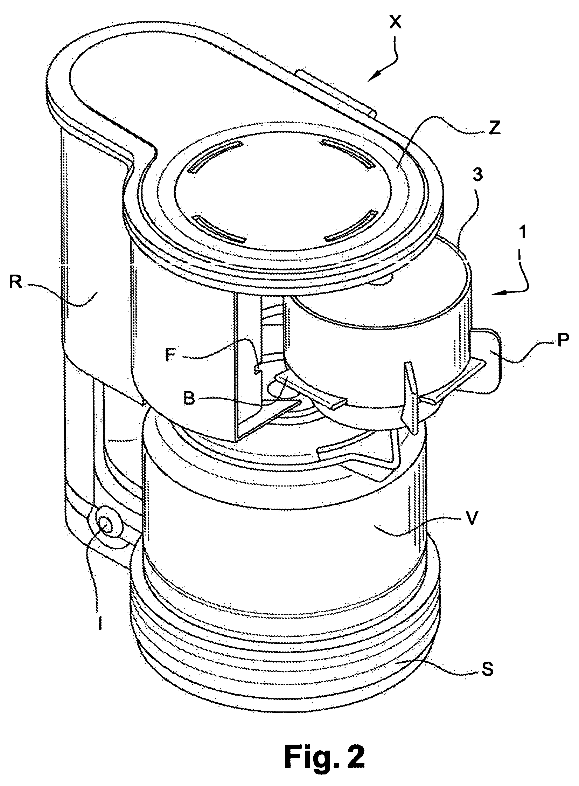

Les figures 2 et 3 représentent schématiquement une machine à boisson comprenant une boîte à infusion selon l'invention.

La machine à café est conçue comme une machine à café filtre classique. Elle comprend donc un réservoir (R) d'eau, une pompe (2) pour injecter l'eau sous pression et un conduit (non représenté) permettant de conduire cette eau vers un point découlement (non représenté) se situant juste au dessus de l'orifice (7) de la partie (3) supérieure de la boite à infusion lorsqu'elle est placée dans la machine. Elle comprend également un moyen de chauffage de ladite eau, avant qu'elle ne s'écoule pour entrer dans ladite boîte. Elle comprend également un interrupteur (I) permettant de faire fonctionner la machine pour la préparation de la boisson. Elle comprend également une partie supérieure (Z) permettant d'éviter les projections d'eau chaude lors de l'écoulement au cours de la préparation de la boisson.

Elle comprend également un socle (S) prévu pour y placer une tasse, un mug, une tasse de voyage ou une verseuse (S). Ledit socle comprenant un moyen de chauffage (non représenté) permettant de maintenir au chaud la boisson préparée, tant que la machine reste allumée.

Cette machine présente la particularité qu'elle est prévue pour recevoir et tenir la boîte à infusion de la présente invention lors de la préparation de la boisson, en dessous du point d'écoulement de l'eau de la machine de manière à ce que l'eau s'écoule par l'orifice (7) de la partie supérieure dans ladite boîte. La machine est ainsi munie de 2 fentes (F) situées de part et d'autre de l'emplacement prévu dans la machine pour recevoir la boîte à infusion et placées au niveau de bourrelets (B) prévus de part et d'autre de la boîte à infusion et permettant le maintien de cette dernière dans la machine à boisson par complémentarité bourrelet / fente.

Cette machine (X) peut donc recevoir et tenir la boîte (1) à infusion telle que représentée à l'exemple 1, munie de poignées (P) permettant de faciliter la préhension de la boîte pour la sortir de la machine à boisson et y introduire les dosettes, puis l'introduire à nouveau dans la machine.

La machine à café ou à thé selon l'invention fonctionne donc comme une machine à café ou à thé traditionnelle utilisant un porte filtre.

Dans le cas de l'usage d'une verseuse (V) pour récupérer la boisson préparée, l'utilisateur extrait la boîte à infusion pour y introduire 1, 2 ou 3 dosettes de 20 gr, ou d'avantage, selon la quantité de matière infusable souhaitée, puis la repositionne sur la machine à café ou à thé.

Un marquage sur le niveau d'eau guide l'utilisateur sur la quantité d'eau à introduire dans le réservoir (R) en fonction du nombre de dosettes et de la force de l'arôme souhaité.

L'utilisateur appuie sur le bouton ou interrupteur (I) de commande de mise en fonctionnement de la machine à café ou à thé et attend la fin de l'infusion pour se servir sa boisson chaude.

Dans le cas de l'usage d'une tasse de voyage, l'utilisateur extrait la boîte à infusion par exemple pour y introduire 1 dosette de 20 gr ou plus. Un marquage sur le niveau d'eau guide l'utilisateur sur la quantité d'eau à introduire dans le réservoir en fonction de la force de l'arôme souhaité.

L'utilisateur appuie sur le bouton de commande de mise en fonctionnement de la cafetière. L'utilisateur attend la fin de l'infusion pour se servir sa boisson chaude

On comprend bien que pendant la phase d'infusion, au moins une dosette contenant la matière infusable est disposée dans la boîte sous l'orifice 7 de la partie supérieure 3 et l'entretoise 11 de la boîte. La dosette est alors traversée par l'eau ce qui lui permet de gonfler ; L'eau étant injectée sous pressions vers la dosette, à l'intérieur de la boîte. L'entretoise permet alors de maintenir un écart entre l'orifice 7 de la partie supérieure de la boîte et la dosette qui gonfle alors, de sorte à éviter le bouchage de l'orifice 7 par la dosette gonflée.

### Exemple 3 : Alternative de machine à boisson chaude et d'une boîte à infusion selon l'invention

Suivant un autre mode de réalisation que celui exposé dans les exemples 1 et 2, la boîte à infusion ne comprend pas de bourrelet et la machine à café pas de fente complémentaire, mais la boîte à infusion est fixée de manière pivotante horizontalement sur ladite machine à café. La fixation pivotante est prévue d'un coté de la boîte et la boite est fixée à la machine à boisson. Cette fixation est amovible pour l'entretien de la machine et le lavage de la boîte. La fixation peut se faire au moyen d'ergot en plastique, de la même matière que la boîte à infusion.

Ainsi, lorsque l'utilisateur souhaite préparer une boisson, il fait pivoter la boîte horizontalement pour la faire sortir de la machine et y introduire la ou les dosette(s), puis replace par pivot inverse la boîte dans la machine avant d'actionner l'interrupteur de mise en marche de la machine.

### Exemple 4 : Alternative de machine à boisson chaude et d'une boîte à infusion selon l'invention

Dans cet exemple, la partie supérieure (3) de la boîte à infusion décrite dans l'exemple 1 est supprimée et remplacée par une partie supérieure (Zbis) de la machine à café représentée sur la figure 2. Suivant cette alternative, c'est la partie supérieure (Zbis) de la machine à café qui sert de couvercle ou partie supérieure de la boite à infusion de la présente invention. Dans ce cas, c'est cette partie supérieure (Zbis) qui est munie de l'entretoise (11) présentée dans l'exemple 1. Dans ce cas également, la partie supérieure (Zbis) et la boîte à infusion sont dimensionnées afin que la partie supérieure ferme la boîte à infusion lorsqu'elle est placée dans la machine à boisson.

## Revendications

1. Boîte à infusion (1) destinée à contenir au moins une dosette (D) qui se laisse traverser par de l'eau tout en retenant une matière infusable (M), ladite boîte étant dotée d'une partie supérieure (3) et d'une partie inférieure (5), chacune de ces parties comportant un orifice (7, 9) permettant un écoulement d'eau traversant ladite dosette lorsqu'elle est présente dans la boîte, ladite boîte étant **caractérisée en ce qu'**elle comprend intérieurement et autour de l'orifice (7) de la partie supérieure (3), au moins une entretoise (11) qui maintient un écart entre l'orifice (7) de la partie supérieure, par lequel l'eau entre dans la boîte, et la dosette (D) alors contenue dans la boîte, lors de l'infusion par passage de l'eau à travers ladite dosette qui gonfle alors.

2. Boîte selon la revendication 1, dans laquelle ladite entretoise entoure l'orifice (7) sous forme d'un anneau présentant des ouvertures (O) latérales.

3. Boîte selon l'une quelconque des revendications 1 ou 2, dans laquelle la paroi intérieure (13) de la boîte est lisse.

4. Boîte selon l'une quelconque des revendications 1 à 3, dans laquelle la partie inférieure intérieure de la boîte comporte des nervures (15) convergentes vers l'orifice de cette partie inférieure.

5. Boîte selon l'une quelconque des revendications 1 à 4, dans laquelle l'orifice (9) de la partie inférieure de la boîte est excentré.

6. Boîte selon l'une quelconque des revendications 1 à 5, dans laquelle la partie supérieure (3) de ladite boîte est un couvercle comprenant l'orifice (7) et l'entretoise (11).

7. Boîte selon l'une quelconque des revendications 1 à 6, ladite boîte ayant un diamètre permettant juste d'accueillir la dosette (D) à plat.

8. Boîte selon l'une quelconque des revendications 1 à 7, ladite boîte pouvant contenir 1 à 5 dosettes empilées.

9. Machine (X) à boisson, notamment à café ou à thé, comprenant la boîte (1) selon l'une quelconque des revendications 1 à 8 où est disposée, sous l'orifice (7) de la partie supérieure et l'entretoise (11), au moins une dosette (D) contenant la matière infusable et qui gonfle pendant l'infusion.

10. Machine (X) à boisson, selon la revendication 9 comprenant une pompe injectant de l'eau sous pression vers la dosette (D).

## Patentansprüche

1. Brühkasten (1), der dazu bestimmt ist, zumindest ein Pad (D) zu enthalten, das sich von Wasser durchströmen lässt, und dabei eine Brühsubstanz (M) zurückhält, wobei der besagte Kasten mit einem oberen Abschnitt (3) und einem unteren Abschnitt (5) versehen ist, wobei jeder dieser Abschnitte eine Öffnung (7, 9) umfasst, die einen Ablauf von Wasser ermöglicht, welches durch das besagte Pad strömt, wenn es im Kasten vorhanden ist, wobei der besagte Kasten **dadurch gekennzeichnet ist, dass** er innen und um die Öffnung (7) des oberen Abschnitts (3) zumindest einen Abstandshalter (11) umfasst, der beim Brühen durch das Durchströmen des Wassers durch das besagte Pad hindurch, welches somit aufquillt, einen Abstand zwischen der Öffnung (7) des oberen Abschnitts, durch die das Wasser in den Kasten einströmt, und dem im Kasten enthaltenen Pad (D) hält.

2. Kasten nach Anspruch 1, wobei der besagte Abstandshalter die Öffnung (7) in Form eines Ringes umgibt, der seitliche Öffnungen (O) aufweist.

3. Kasten nach einem der Ansprüche 1 oder 2, wobei die Innenwand (13) des Kastens glatt ist.

4. Kasten nach einem der Ansprüche 1 bis 3, wobei der innere untere Abschnitt des Kastens Rippen (15) hat, die zur Öffnung dieses unteren Abschnitts hin zusammenlaufen.

5. Kasten nach einem der Ansprüche 1 bis 4, wobei die Öffnung (9) des unteren Abschnitts des Kastens außerhalb der Mitte liegt.

6. Kasten nach einem der Ansprüche 1 bis 5, wobei der obere Abschnitt (3) des besagten Kastens ein Deckel ist, der die Öffnung (7) und den Abstandshalter (11) umfasst.

7. Kasten nach einem der Ansprüche 1 bis 6, wobei der besagte Kasten einen Durchmesser aufweist, der es lediglich ermöglicht, das Pad (D) in flacher Form aufzunehmen.

8. Kasten nach einem der Ansprüche 1 bis 7, wobei der besagte Kasten 1 bis 5 gestapelte Pads enthalten kann.

9. Maschine (X) für Getränke, vor allem für Kaffee oder Tee, den Kasten (1) nach einem der Ansprüche 1 bis 8 umfassend, in dem unter der Öffnung (7) des oberen Abschnitts und dem Abstandshalter (11) zumindest ein Pad (D) angeordnet ist, das die Brühsubstanz enthält und das während des Brühens aufquillt.

10. Maschine (X) für Getränke nach Anspruch 9, eine Pumpe umfassend, die Wasser unter Druck zum Pad (D) einspritzt.

## Claims

1. Infusion box (1) intended to contain at least one pod (D) which can be passed through by water while holding an infusible material (M), said box being provided with an upper part (3) and a lower part (5), each of these parts having an orifice (7, 9) enabling a flow of water to pass through said pod when the latter is present in the box, said box being **characterized in that** it comprises in the interior thereof and around the orifice (7) in the upper part (3), at least one spacer (11) that maintains a separation between the orifice (7) of the upper part, through which the water enters into the box, and the pod (D) then contained in the box, during the infusion by the passing of water through said pod which then swells.

2. Box according to claim 1, wherein said spacer surrounds the orifice (7) in the form of a ring that has lateral openings (O).

3. Box according to any of claims 1 or 2, wherein the inner wall (13) of the box is smooth.

4. Box according to any of claims 1 to 3, wherein the inner lower part of the box comprises ribs (15) converging towards the orifice of this lower part.

5. Box according to any of claims 1 to 4, wherein the orifice (9) of the lower part of the box is off-centre.

6. Box according to any of claims 1 to 5, wherein the upper part (3) of said box is a cover comprising the orifice (7) and the spacer (11).

7. Box according to any of claims 1 to 6, said box having a diameter that just makes it possible to receive the pod (D) flat.

8. Box according to any of claims 1 to 7, said box being able to contain 1 to 5 stacked pods.

9. Beverage machine (X), in particular for coffee or tea, comprising a box (1) according to any of claims 1 to 8 wherein is arranged, under the orifice (7) of the upper portion and the spacer (11), at least one pod (D) containing the infusible material and which swells during the infusion.

10. Beverage machine (X), according to claim 9 comprising a pump that injects water under pressure into the pod (D).
